# EUROPÄISCHE PATENTSCHRIFT

(11) **EP 0 956 903 B1**
(45) Veröffentlichungstag und Bekanntmachung des Hinweises auf die Patenterteilung: **30.11.2005**
(21) Anmeldenummer: 99107225.7
(22) Anmeldetag: 14.04.1999
(51) Int. Cl.: B03B 9/06, B07B 1/28, B07B 4/02, B27N 1/00

(54) **Anlage zum Reinigen von Hackschnitzeln**
Installation for cleaning wood chips
Installation pour nettoyer des copeaux de bois

(30) Priorität: 13.05.1998 DE 19821437
(43) Veröffentlichungstag der Anmeldung: 17.11.1999
(73) Patentinhaber: B. Maier Zerkleinerungstechnik GmbH, 33626 Bielefeld (DE)
(72) Erfinder: Loth, Robert, 32791 Lage-Müssen (DE)
(74) Vertreter: Dr. Weitzel & Partner

(56) Entgegenhaltungen:
- DE-A- 19 539 499
- US-A- 5 000 390
- US-A- 5 568 896

## Beschreibung

Hackschnitzel werden hergestellt durch Hacken von Prügeln oder Stämmen. Dabei werden sie mittels eines Zufuhrkanales einer Trommel zugeführt, die auf deren Umfang mit Hackmessern bestückt ist.

Die Hackschnitzel werden sodann in Zerspanem weiterverarbeitet zu Spänen. Diese dienen als Ausgangsmaterial für Spanplatten und dergleichen. Eine Voraussetzung für das Weiterverarbeiten ist ein hoher Reinheitsgrad der Hackschnitzel. Die Hackschnitzel müssen frei von Fremdstoffen jeglicher Art sein. Als Fremdstoffe kommen Metalle, Steine sowie Leichtstoffe wie Rinde in Betracht. Eine derartige Anlage zur Herstellung von Hackschitzeln ist aus DE-A-19 539 499 bekannt und wird hier mit einer Siebmaschine, einem Nichteisen-Abscheider sowie Schwerstoff-/Leichstoff-Ausleser bezeichnet.

Es wäre wünschenswert, die Reinigung von Hackschnitzeln gleich an jenem Ort vorzunehmen, an dem sie anfallen. Da Hackschnitzel an verschiedenen Orten erzeugt werden, müßten somit auch mehrere Reinigungsstationen vorgesehen werden.

Der Erfindung liegt die Aufgabe zugrunde, eine Hackschnitzel-Reinigungsanlage anzugeben, die kompakt, leicht transportabel und leistungsstark ist.

Diese Aufgabe wird durch die Merkmale von Anspruch 1 gelöst.

Die Erfinder haben damit eine Reinigungsanlage geschaffen, die durch geschickte Zuordnung der einzelnen Reinigungs-Einrichtungen sehr wenig Raum beansprucht und auch ein verhältnismäßig geringes Gewicht aufweist, so daß sie als mobile Einheit gestaltet werden kann. Damit ist es möglich, die Anlage als Reinigungsstation zu den verschiedensten Orten zu verbringen, an denen Hackschnitzel anfallen. Die erfindungsgemäße Reinigungsanlage eignet sich besonders gut zum Reinigen trockener Hackschnitzel.

Die Erfindung ist anhand der Zeichnung näher erläutert. Darin ist im einzelnen folgendes dargestellt:
- Fig. 1: zeigt ein Materialflußschema einer erfindungsgemäßen Reinigungsstation;
- Fig. 2: zeigt eine praktische Ausführungsform einer erfindungsgemäßen Reinigungsstation in Seitenansicht;
- Fig. 3: zeigt den Gegenstand von Figur 2 in Draufsicht;
- Fig. 4: ist eine Ansicht des Gegenstandes von Figur 2 auf eine Stirnseite, und zwar gesehen in Richtung der Pfeile A-A in Figur 3.

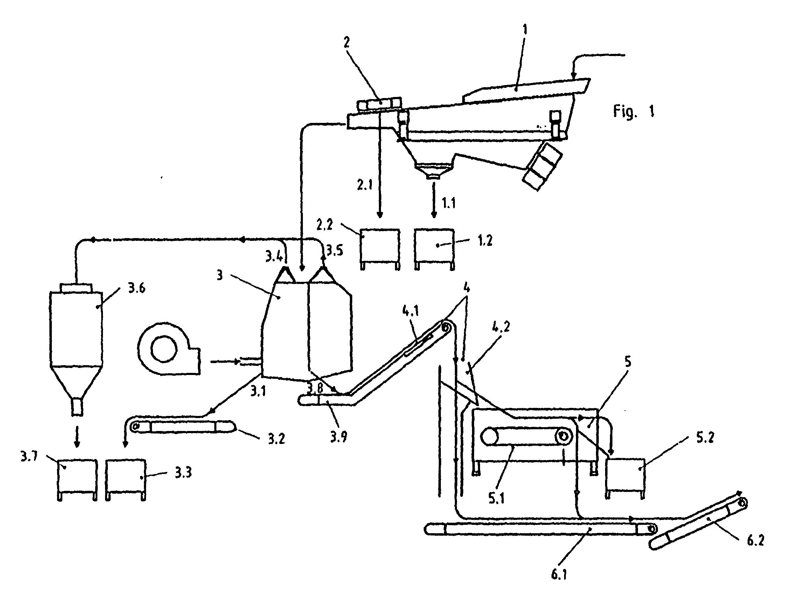

Wie man aus dem Materialflußschema gemäß Figur 1 erkennt, werden die zu reinigenden Hackschnitzel zunächst einer Vibrationssiebrinne 1 zugeführt. Diese weist einen Austrag 1.1 auf, durch den Feingut ausgeschieden wird, beispielsweise kleine Steinchen und Sand.

Mit der Vibrationssiebrinne 1 baulich verbunden ist ein Eisenabscheider 2, der mit einer Magnetspule versehen ist. Diese erkennt die betreffenden Verunreinigungen, hauptsächlich Eisen, und führt diese über eine Klappe oder einen Luftstrom einem Seitenauslaß 2.1 zu. Die ausgeschiedenen Stoffe der Vibrationssiebrinne 1 werden einem Container 1.2 zugeführt und die ausgeschiedenen Stoffe des Eisenabscheiders 2 einem Container 2.2.

Das nunmehr vorgereinigte Material gelangt sodann zu einem Schwerschmutzabscheider 3. Im vorliegenden Falle umfaßt dieser zwei Stufen. Die dort abgescheideten Schwerteile, wie Steine, usw. gelangen durch einen Austrag 3.1 auf einen Bandförderer 3.2 und von dort zu einem Container 3.3. Innerhalb des Schwerschmutzabscheiders befindet sich ein hier nicht erkennbarer Aufstromsichter. Mittels des Aufstromsichters gelangen Leichtteile durch Austräge 3.4 und 3.5 zu einem Wirbelsichter 3.6 und von dort zu einem Leichtteilcontainer 3.7.

Das nunmehr weitergereinigte Gut gelangt durch einen weiteren Auslaß 3.8 auf einen weiteren Bandförderer 3.9. Der Materialstrom enthält nunmehr außer den vorgereinigten Hackschnitzeln praktisch nur noch Nichteisen-Metalle.

Eine weitere Sichterstufe 4 umfaßt ein Metallsuchgerät 4.1 mit einer Weiche 4.2. Bei Erkennen von Nichteisen-Metallen durch die Suchspule 4.1 schwenkt die Weiche 4.2. im richtigen Zeitpunkt um, so daß verunreinigtes Material einem Nichteisen-Abscheider 5 zugeführt wird, der einen weiteren Bandförderer 5.1 umfaßt, und von dort zu einem Container 5.2. Der Gutstrom gelangt sodann über Bandförderer 6.1, 6.2 zu einem weiteren Container, der hier im Materialflußschema nicht dargestellt ist.

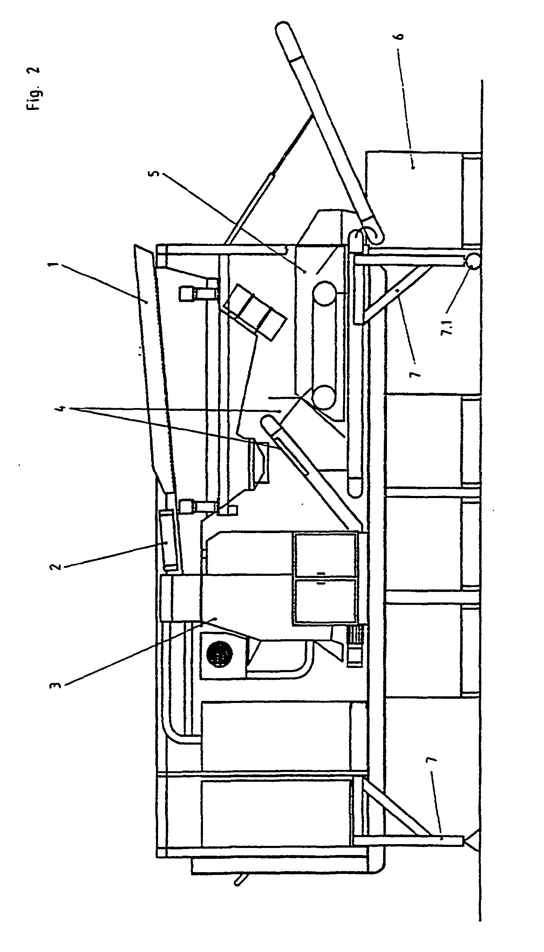

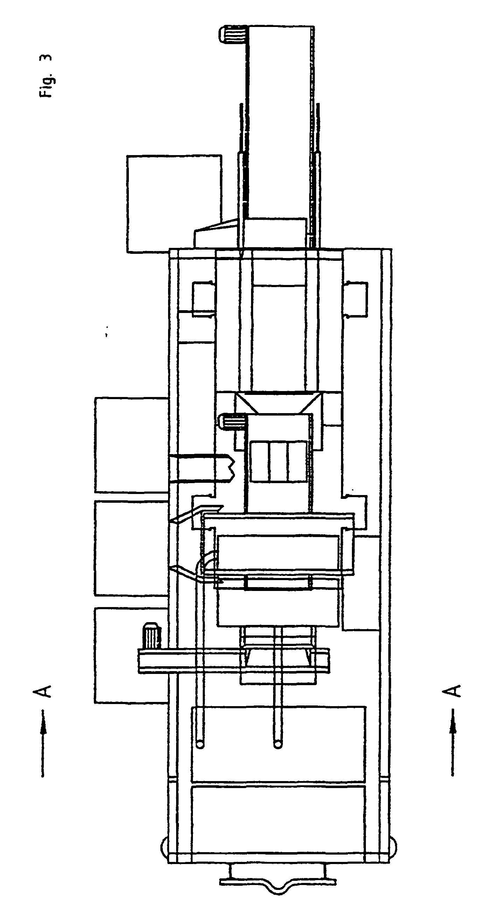

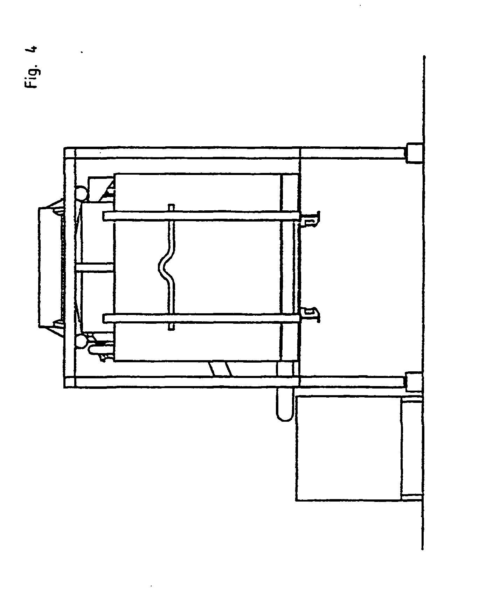

Die Figuren 2 bis 4 lassen die Zuordnung der einzelnen Bauteile zueinander erkennen. Wie man sieht, ist die Vibrationssiebrinne in der Station rechts oben angeordnet. Hier wird das zu reinigende Gut aufgegeben. Der Materialstrom verläuft sodann durch die einzelnen oben erwähnten Einrichtungen, nämlich durch den Eisenabscheider 2, den Schwergutabscheider 3 mit Aufstromsichter, zum Sichter 4 mit Suchspule 4.1 und Weiche 4.2, zum Nichteisen-Abscheider 5 und schließlich zu einem Gutstoffcontainer 6.

Die gesamte Reinigungsstation ist auf Stützen 7 mit am unteren Ende befindlichen Rollen 7.1 aufgelagert. Dabei kann jederzeit das Fahrgestellt eines Hängers untergeschoben werden, worauf die Stützen weggeklappt werden, so daß die Reinigungsstation völlig mobil ist.

Die Vorteile der erfindungsgemäßen Reinigungsstation lassen sich wie folgt zusammenfassen:
kompakte Bauweise, Mobilität, hohe Leistung von bis zu 10 t/h, durch eigenen Diesel unabhängig in der Energieversorgung und flexibel einsetzbar, kurze Rüstzeiten, Ein-Mann-Bedienung, Möglichkeit der Fernbedienung, geringe Staubentwicklung durch Absaugung.

## Patentansprüche

1. Reinigungsanlage zum Reinigen von Hackschnitzeln, mit den folgenden in Reihe geschalteten Einrichtungen:
mit einem Vibrationssieb (1);
mit einem Eisenabscheider (2);
mit einem Schwergutabscheider (3);
mit einem Nichteisen-Sichter (4);
mit einem Nichteisen-Abscheider (5);
die Reinigungsanlage bildet eine fahrbare Einheit;
in einer Seitenansicht der fahrbaren Einheit gesehen werden die zu sichtenden Hackschnitzel der fahrbaren Einheit an deren einer Stirnseite zugeführt, und zwar oben;
der Materialstrom verläuft sodann etwa auf ein und derselben Höhe verbleibend in Richtung auf die andere Stimseite, wird sodann nach unten umgelenkt und wandert in Bodennähe der fahrbaren Einheit wieder zur erstgenannten Stirnseite zurück;
die genannten Einrichtungen (1) bis (5) sind auf dem genannten Wege des Materialstromes hintereinander angeordnet.

2. Reinigungsanlage nach Anspruch 1, **dadurch gekennzeichnet, daß** dem Schwerschmutzabscheider (3) ein Aufstromsichter zugeordnet ist.

3. Reinigungsanlage nach Anspruch 1 oder 2, **dadurch gekennzeichnet, daß** der Schwerschmutzsichter (4) ein Metallsuchgerät (4.1) sowie eine Weiche (4.2) aufweist.

4. Reinigungsanlage nach einem der Ansprüche 1 bis 3, **dadurch gekennzeichnet, daß** zur Stromversorgung ein Diesel-Generator-Satz vorgesehen ist.

## Claims

1. Cleaning installation for cleaning wood chips with the following devices connected to one another in series: a vibration sieve (1), a ferrous metal separator (2), a heavy material separator (3), a non-ferrous metal sifter (4); a non-ferrous metal separator (5); the cleaning installation forms a mobile unit, in a side view of the mobile unit the wood chips to be sifted are fed into the mobile unit at one side end, i.e. the top; the material then flows remaining at roughly the same height in the direction of the other side end, is then directed downwards and returns to the bottom of the mobile unit back to the first side end; the said devices (1) to (5) are arranged one behind the other along the said material flow path.

2. Cleaning installation according to claim 1, **characterised in that** an up-current sifter is assigned to the heavy dirt separator (3).

3. Cleaning installation according to claim 1 or 2, **characterised in that** the heavy dirt sifter (4) comprises a metal detecting device (4.1) and a separation point (4.2).

4. Cleaning installation according to one of claims 1 to 3, **characterised in that** a diesel generator assembly is provided for the power supply.

## Revendications

1. Installation de nettoyage pour nettoyer des copeaux de bois présentant les dispositifs suivants branchés en série :
un crible vibrant (1) ;
un séparateur de fer (2) ;
un séparateur de produits lourds (3) ;
un sélecteur de produits non ferreux (4) ;
un séparateur de produits non ferreux (5) ;
l'installation de nettoyage formant une unité mobile ;
dans une vue en côté de l'unité mobile, les copeaux de bois à passer au crible de l'unité mobile sont amenés sur une de ses faces avant, notamment par en haut ;
le flux de matériau s'écoule ensuite en restant à la même hauteur en direction de l'autre face avant puis est dévié vers le bas et revient à proximité du sol de l'unité mobile vers la première face avant ;
lesdits dispositifs (1) à (5) sont disposés les uns derrière les autres sur la trajectoire citée dudit flux de matériau.

2. Installation de nettoyage selon la revendication 1, **caractérisée en ce qu'**un séparateur à courant de sustentation est associé au séparateur de produits lourds (3).

3. Installation de nettoyage selon l'une des revendications 1 ou 2, **caractérisée en ce que** le sélecteur de poussières lourdes (4) présente un détecteur de métaux (4.1) ainsi qu'un filtre (4.2).

4. Installation de nettoyage selon l'une quelconque des revendications 1 à 3, **caractérisée en ce qu'**un groupe de générateurs diesel est prévu pour l'alimentation en courant.
